# EUROPÄISCHE PATENTSCHRIFT

(11) **EP 1 623 757 B1**
(45) Veröffentlichungstag und Bekanntmachung des Hinweises auf die Patenterteilung: **11.02.2009**
(21) Anmeldenummer: 04016286.9
(22) Anmeldetag: 10.07.2004
(51) Int. Cl.: B01J 13/04, B01J 13/20, A61K 8/11, A61K 9/50, A23P 1/04

(54) **Mikrokapseln (XXXII)**
Microcapsules (XXXII)
Microcapsules (XXXII)

(43) Veröffentlichungstag der Anmeldung: 08.02.2006
(73) Patentinhaber: Cognis IP Management GmbH, 40589 Düsseldorf (DE)
(72) Erfinder: Asensio, Juan-Antonio, Dr., 08820 El Prat de Llobregat (Barcelona) (ES); Viladot Petit, Josep-Lluis, Dr., 08018 Barcelona (ES)

(56) Entgegenhaltungen:
- WO-A-02/24319
- US-A- 5 427 935

## Beschreibung

### Gebiet der Erfindung

Die Erfindung befindet sich auf dem Gebiet der Nahrungsmittelzusatzstoffe und betrifft neue mikroverkapselte Wirkstoffe sowie deren Verwendung.

### Stand der Technik

Unter den Begriffen "Mikrokapsel" oder "Nanokapsel" werden vom Fachmann sphärische Aggregate mit einem Durchmesser im Bereich von etwa 0,0001 bis etwa 5 und vorzugsweise 0,005 bis 0,5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon.

Beispiele für Mikrokapseln des Stands der Technik sind folgende Handelsprodukte (in Klammem angegeben ist jeweils das Hüllmaterial) *: Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide). Chitosanmikrokapseln und Verfahren zu ihrer Herstellung sind Gegenstand früherer Patenanmeldungen der Patentanmelderin [WO 01/01926, WO 01/01927, WO 01/01928, WO 01/01929].

So vielfältig, wie die Typen der im Handel befindlichen Mikroverkapselungssysteme sind, so unterschiedlich sind die Anforderungen an die Produkte. Ein wesentlicher Faktor ist die Härte und die chemische Beständigkeit der Kapseln, die je nach Anwendung sehr unterschiedlich sein kann. Um den variierenden Anforderungen gerecht zu werden, bleibt Anbietern von Verkapselungssystemen bislang nur übrig, auf eine Reihe unterschiedlicher Produkte zurückzugreifen, d.h. für die jede konkrete Anwendung jeweils einen Mikrokapseltyp zu optimieren. Es liegt auf der Hand, dass auf diesem Wege eine hohe Komplexität der Produktpalette die Folge ist, was aus ökonomischer Sicht unerwünscht sein muss. Es besteht daher ein starkes Interesse daran, ein geeignetes Verkapselungssystem zu entwickeln, das ein hohes Maß an Flexibilität besitzt, so dass insbesondere nicht immer andere Ausgangsstoffe zum Einsatz gebracht werden müssen, um unterschiedliche technische Anforderungen zu erfüllen.

Die Aufgabe der vorliegenden Erfindung hat somit darin bestanden, neue verkapselte Wirkstoffe zur Verfügung zu stellen, bei denen die Beständigkeit und Härte der Hüllmembranen systematisch über das Herstellverfahren gesteuert werden kann.

### Beschreibung der Erfindung

Gegenstand der Erfindung Gegenstand der Erfindung sind Mikrokapseln mit mittleren Durchmessern im Bereich von 0,001 bis 5 mm, bestehend aus einer Hüllmembran und einer Matrix, die dadurch erhältlich sind, dass man
(a) aus Agarosen, Alginaten, Gellan Gum und gegebenenfalls Wirkstoffen eine Matrix zubereitet,
(b) gegebenenfalls die Matrix in einer Ölphase dispergiert,
(c) die Matrix mit wässrigen Lösungen von Erdalkalimetallsalzen behandelt und gegebenenfalls dabei die Ölphase entfernt.

Überraschenderweise wurde gefunden, dass sich die Härte und Beständigkeit der erfindungsgemäßen Mikrokapseln beliebig steuern und einstellen lässt, indem man die Mengenverhältnisse der vier Komponenten Agarose, Alginat, Gellan Gum und Erdalkalikation variiert. Auf diese Weise können ausgehend von den gleichen Edukten Mikrokapseln mit unterschiedlichen mechanischen Eigenschaften hergestellt werden, was mit einem hohen ökonomischen Vorteil verbunden ist. Die so erhaltenen Mikrokapseln weisen in der Regel einen mittleren Durchmesser von 10 bis 500 micras (= 0,01 bis 0,5 mm) auf.

Ein weiterer Gegenstand der Erfindung betrifft ein Verfahren zur Herstellung von Mikrokapseln mit mittleren Durchmessern im Bereich von 0,001 bis 5 mm, bestehend aus einer Hüllmembran und einer Matrix, bei dem man
(a) aus Agarosen, Alginaten, Gellan Gum und gegebenenfalls Wirkstoffen eine Matrix zubereitet,
(b) gegebenenfalls die Matrix in einer Ölphase dispergiert,
(c) die Matrix mit wässrigen Lösungen von Erdalkalimetallsalzen behandelt und gegebenenfalls dabei die Ölphase entfernt.

### Agarosen

Agarosen stellen thermogelierende Heteropolysaccharide dar, welche in Form des aus Rotalgen zu gewinnenden Agar-Agar auch zusammen mit bis zu 30 Gew.-% nicht-gelbildenden Agaropektinen vorliegen können. Hauptbestandteil der Agarosen sind lineare Polysaccharide aus D-Galaktose und 3,6-Anhydro-L-galaktose, die alternierend β-1,3- und β-1,4-glykosidisch verknüpft sind. Die Heteropolysaccharide besitzen vorzugsweise ein Molekulargewicht im Bereich von 110.000 bis 160.000 und sind sowohl farb- als auch geschmacklos.

### Alginate

Alginate stellen Salze der Alginsäure dar. Bei der Alginsäure handelt es sich um ein Gemisch carboxylgruppenhaltiger Polysaccharide mit folgendem idealisierten Monomerbaustein:

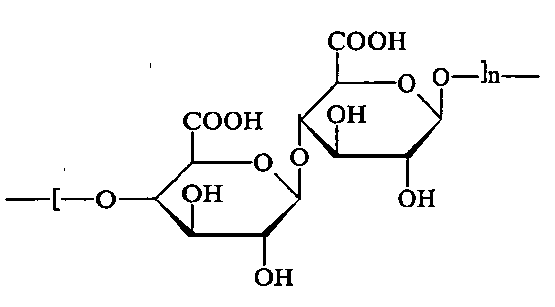

Das durchschnittliche Molekulargewicht der Alginsäuren bzw. der Alginate liegt im Bereich von 150.000 bis 250.000. Dabei sind als Salze der Alginsäure sowohl deren vollständige als auch deren partiellen Neutralisationsprodukte zu verstehen, insbesondere die Alkalisalze und hierunter vorzugsweise das Natriumalginat ("Algin") sowie die Ammonium- und Erdalkalisalze. besonders bevorzugt sind Mischalginate, wie z.B. Natrium/Magnesium- oder Natrium/Calciumalginate.

### Gellan Gum

Gellan Gum (E 418) stellt ein bakterielles Exopolysaccharid dar, das im Rahmen der Untersuchung tausender Bakterien gefunden wurde und heute kommerziell durch aerobe Fermentation von *Sphingomonas elodea* bzw. *Pseudomonas elodea* hergestellt wird.

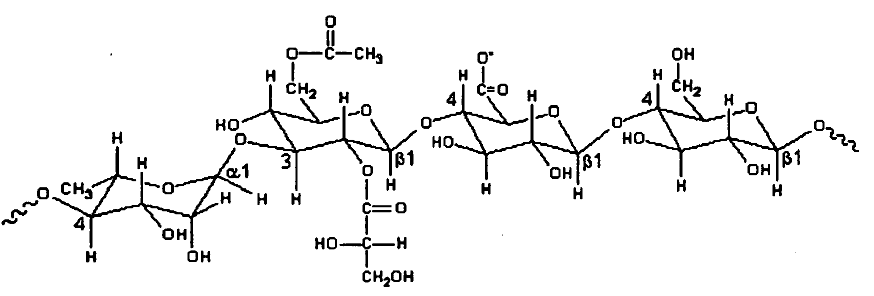

Chemisch betrachtet handelt es sich um ein Tetrasaccharid mit einem Molekulargewicht von etwa 50.000 Dalton, das üblicherweise vor dem Einsatz in der Nahrungsmittelindustrie durch Alkalibehandlung verseift wird. Gellan Gum formt eine koaxiale dreifache Doppelhelix mit einer Weite von rund 56 Å bestehend aus zwei linkshändigen um einander gewundenen Ketten, wobei sich die Acetatgruppen in der Peripherie befinden und die Glycerylgruppen die beiden Helixstränge stabilisieren.

### Wirkstoffe

Die Auswahl der Wirkstoffe, die verkapselt werden sollen, ist an sich wenig kritisch, da das erfindungsgemäße System den weiteren Vorteil besitzt, dass es sich gegenüber den allermeisten aktiven Prinzipien als chemisch inert erweist. Typische Beispiele für geeignete Wirkstofftypen sind einerseits Farb- und Geschmacksstoffe und andererseits Pflanzenextrakte sowie biogene aktive Prinzipien.

### Farb- und Geschmacksstoffe

Die Auswahl der Farbstoffe richtet sich nach ihrer toxikologischen Unbedenklichkeit bzw. nach gesetzlichen Bestimmungen über die Zulassung in Lebensmitteln. Für eine Anwendung im Bereich der Nahrungsmittelzusatzstoffe kommen beispielsweise lebensmitteltaugliche Eisenpigmente in Frage, für den Einsatz im Bereich der dekorativen Kosmetik (z.B. Lippenstifte) auch z.B. Kochenillerot A (C.I. 16255), Patentblau V (C.I.42051), Indigotin (C.1.73015), Chlorophyllin (C.1.75810), Chinolingelb (C.I.47005), Titandioxid (C.I.77891), Indanthrenblau RS (C.I. 69800) oder Krapplack (C.I.58000). Als Geschmacksstoffe oder Aromen kommen beispielsweise Pfefferminzöl, Krauseminzöl, Anisöl, Sternanisöl, Kümmelöl, Eukalyptusöl, Fenchelöl, Zitronenöl, Wintergrünöl, Nelkenöl, Menthol und dergleichen sowie Extrakte von Früchten sowie synthetische Fruchtaromen in Frage.

### Pflanzenextrakte

Üblicherweise sind die Pflanzenextrakte, die im Sinne der vorliegenden Erfindung als eine Gruppe von Wirkstoffen Verwendung finden können, ausgewählt aus der Gruppe, die gebildet wird von *Ginkgo biloba, Oleacea europensis, Glyzyrrhiza glabra, Vaccinium myrtillus, Trifolium pratense, Litchi sinensis, Vitis vinifera, Brassica oleracea, Punica granatum, Petroselinium crispum, Centella asiatica, Passiflora incarnata, Medicago sativa, Valeriana officinalis, Castanea sativa, Salix alba* sowie *Hapagophytum procumbens.* Im folgenden wird kurz auf die Zusammensetzung und die wesentlichen aktiven Wirkstoffe in den Extrakten eingegangen.

### • Ginkgo biloba

Die aktiven Wirkstoffe der Extrakte, die aus den Blättern des Ginkgobaumes *(Ginkgo biloba)* gewonnen werden, sind Flavonoidglycosides, welche unter anderem (Iso)Quercitinglycoside, Kaempferol, Kaempferol-3-rhamnoside, Isorhamnetin, Luteolinglycoside, Sitosterolglycoside und insbesondere hexacyclische Terpenlactone, die sogenannten Ginkgolide A, B, C, J, M und Bilobalide enthalten. 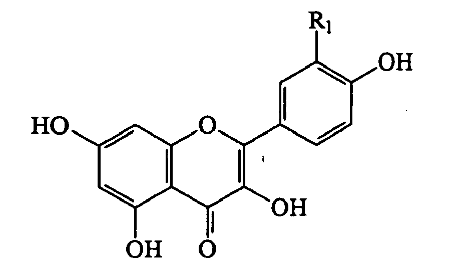 Isorhamnetin (R¹ = H), Kaempferol (R¹ = OH), Ginkgolid A (R¹ = OMe)

### • Oleacea europensis

Der Hauptbestandteil der Blätter des Olivenbaums *(Oleacea europensis)* ist das Antioxidants Oleuropein, das auch die wichtigste Quelle für Hydroxytyrosol darstellt.

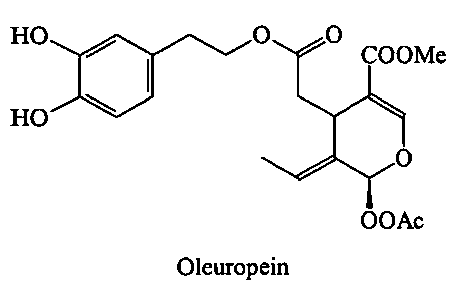

### • Glyzyrrhiza glabra

Hauptbestandteil des Extraktes der Süßwurzel *Glyzyrrhiza glabra* ist die Glyzyrrhetinsäure.

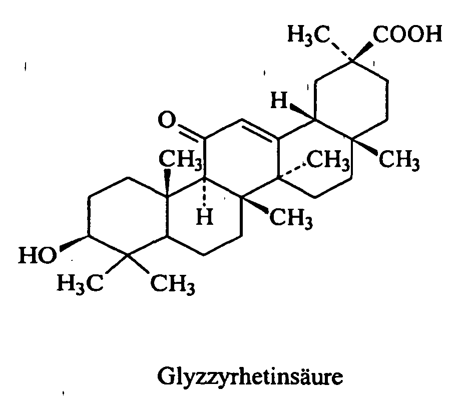

### • Vaccinium myrtillus

Extrakte der gemeinen Blaubeere *(Vaccinium myrtillus)* enthalten eine Mischung von wenigstens 15 verschiedenen Anthocyanosides, wie beispielsweise dem folgenden: 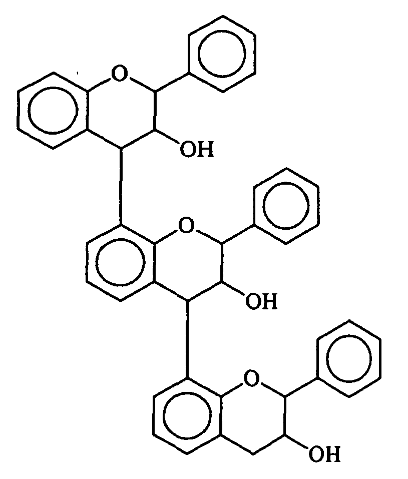 Üblicherweise, weisen die Extrakte 20 bis 25 Gew.-% Anthocyanoside, 5 bis 10 Gew.-% Tannine sowie geringe Mengen verschiedener Alkaloide, wie z.B. Myrtin und Epimyrtin, Phenolsäuren sowie Glycoside von Quercitrin, Isoquercitrin und Hyperosid auf.

### • Trifolium pratense

Die Hauptbestandteile der Extrakte des Rotklees *(Trifolium pratense)* sind Isoflavone, wie z.B. Daidzein, Genestein, Formononentin and Biochanin A sowie deren Glucosides wie z.B. Ononin oder Sissostrin:

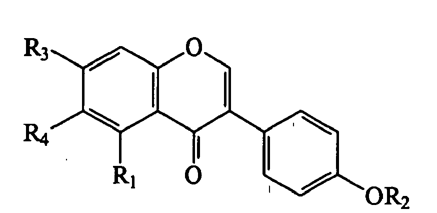

| Isoflavonglucoside | R₁ | R₂ | R₃ | R₄ |
|---|---|---|---|---|
| Daizidin | H | H | Glucose | H |
| Genistin | H | H | Glucose | OH |
| Ononin | H | CH₃ | Glucose | H |
| Sissostrin | H | CH₃ | Glucose | OH |

### • Litchi sinensis

Extrakte, die aus den Schalen der Litchifrucht *(Litchi sinensis)* gewonnen werden, weisen hohe Gehalte an Flavonerivaten auf, wie z.B. 2-Phenyl-4H-1-benzopyranen, Flavanen, Flavan-3-olen (Catechinen, Catechinoligomeren), Flavan-3,4-diolen (Leucoanthocyaniden), Flavonen, Flavonolen und Flavononen. Der Hauptbestandteil wird jedoch ausgemacht von kondensierten Tanninen, sogenannten Procyanodolen (OPC). Diese Stoffe enthalten 2 bis 8 Monomere des Catechins oder eines Catechintyps, wie z.B. Procyanidin, Proanthocynidin, Procyanidole, Oligoprocyanidin, Leucoanthocyanidin, Leucodelphinin, Leucocyanin and Anthocyanogen. OPC, vorzugsweise Proanthocyanidin A2 (OPC A2) verhalten sich wie Vitamin P, vor allem mit Hinblick auf die Inhibierung von Matrixmetallproteinasen.

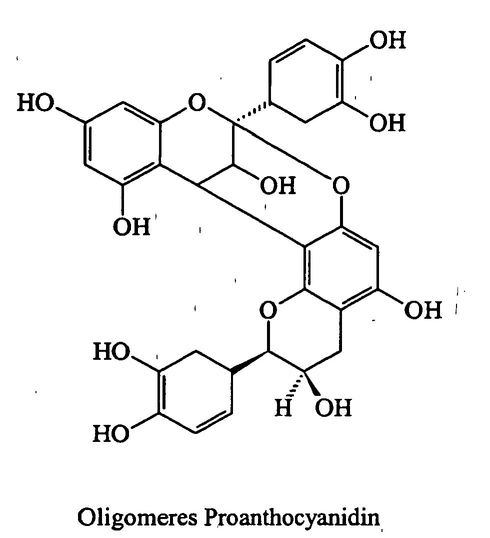

### • Vitis vinifera

Die Hauptbestandteile Extrakte aus Blättern, Wurzeln und insbesondere Schalen der Weintraube *(Vitis vinifera)* sind Polyphenole vom oben beschriebenen OPC-Typ.

### • Brassica oleracea

Die Hauptbestandteile der Extrakte des Blumenkohls *(Brassica oleracea)* sind Aminosäuren, insbesondere Methionin und Cystein sowie die Glucosinolate, wie z.B. Glucoraphanin.

### • Punica granatum

In den Extrakten des Granatapfels *(Punica granatum)* finden sich neben Zuckern und Zitronensäure insbesondere Delphinidin-1,2-glykoside sowie deren Aglykone.

### • Petroselinium crispum

Hauptbestandteil des fetten Öls der Petersilie *(Petroselinium crispum)* ist die Petroselinsäure. Die Extrakte hingegen zeigen hohe Gehalte an Apiol (1-Allyl-2,5-dimethoxy-3,4-(methylendioxy)benzol,), sowie Apiin, Myristicin, Pinen und Selinen.

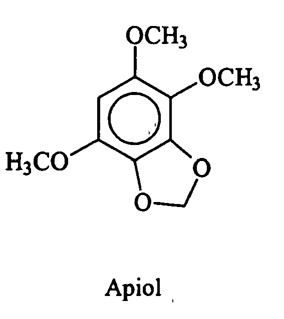

### • Centella asiatica

Hauptbestandteile der Extrakte der *Centella asiatica* sind hochkondensierte Naphthensäuren, speziell Asiaticasäure, Madecassicasäure sowie deren Glycoside.

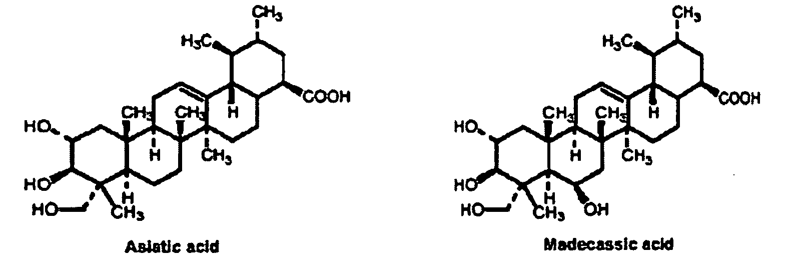

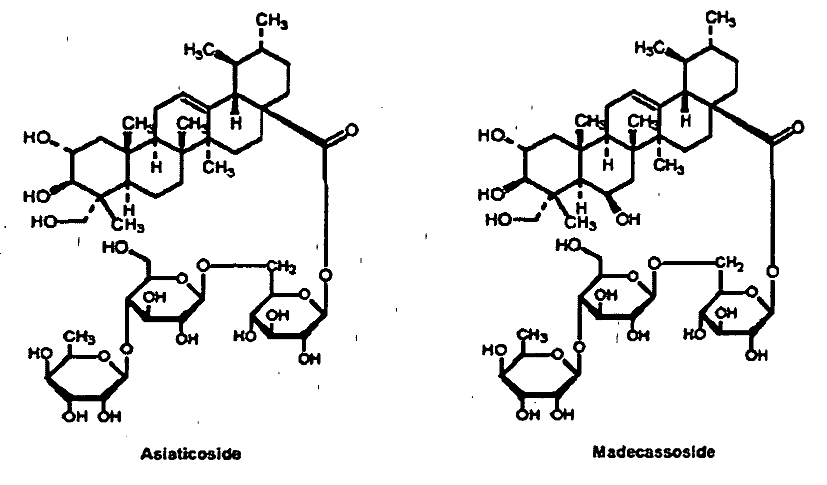

### • Passiflora incarnata

Extrakte der Passionsfrucht *(Passiflora incarnata)* sind reich an Flavonen vom Typ des Apigenins und Luteolins sowie deren C-Glycoside.

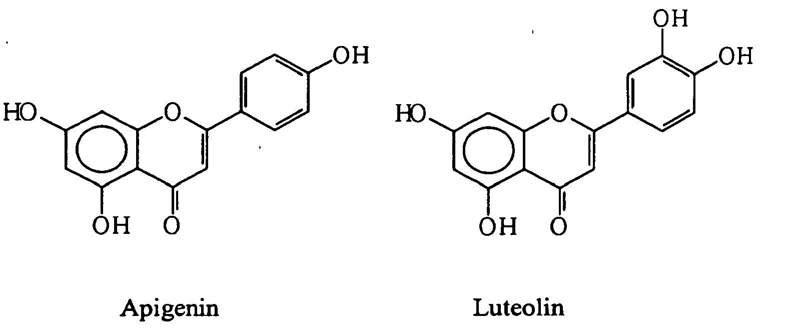

Des weiteren enthalten sie 2"-B-D-Glucosides, Schaftoside and Isoschaftoside, Isovitexin, Isoorientin, Vicenin-2, Incenin-2, Daponanin sowie Spurenelement, nämlich vor allem Kalzium, Phosphor und Eisen.

### • Medicago sativa

Extrakte der Alfalfa *(Medicago sativa)* sind reich an Isoflavonen, wie z.B. Daidzein, Genestein, Formononetin, Biochanin A und Tricin :

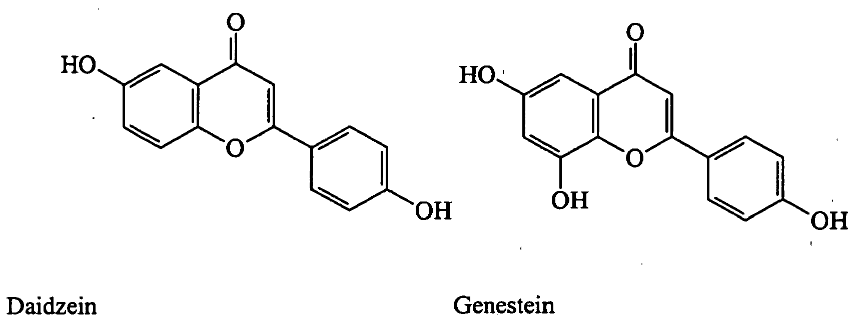

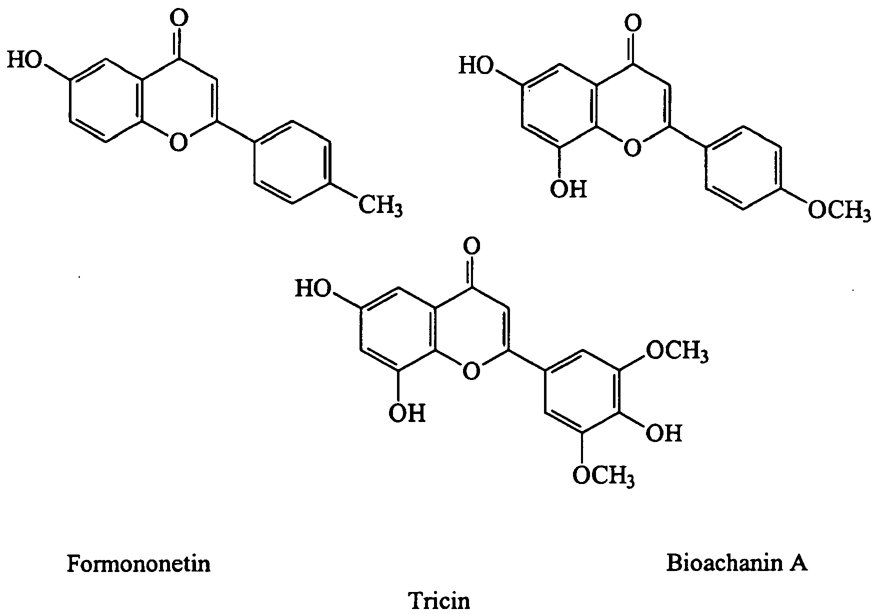

### • Valeriana officinalis

Die Hauptbestandteile von Extrakten der *Valeriana officinalis* sind Valeriansäure, Valerianon sowie Borneolester.

### • Castanea sativa

Rosskastanienextrakte *(Castanea sativa)* enthalten hauptsächlich Saponine sowie Escin, welches die Mischung zweier Glycoside darstellt, deren Aglycone sich von Proteoescigenin ableiten, während es sich bei den Zuckern entweder um Glucoronsäure oder zwei Molekülen D-Glucose handelt. Die beiden Glycoside unterscheiden sich in der Natur der Acylgruppen in der C22-Position.

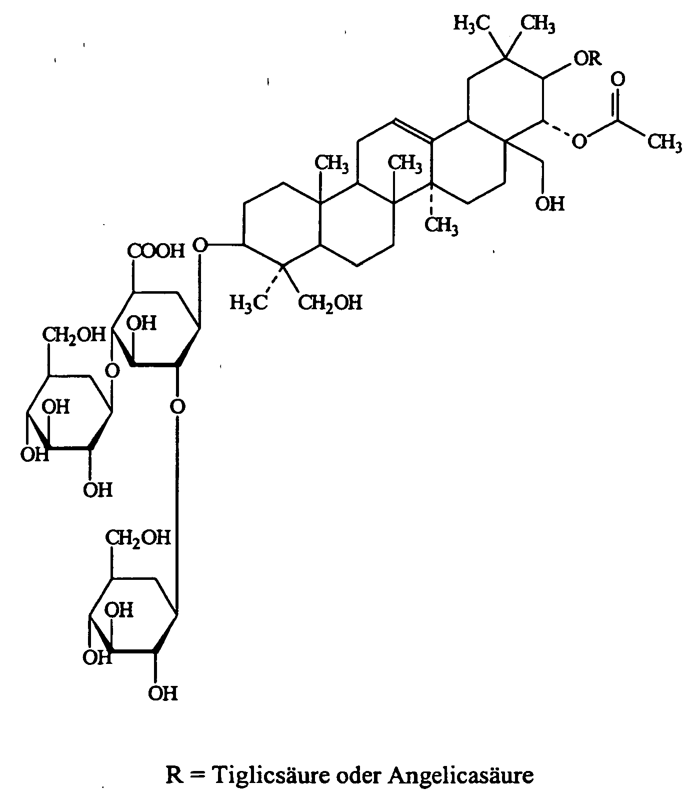

Während α-Escin ein amorphes Pulver darstellt, welches bei 225 bis 227 °C schmilzt und leicht wasserlöslich ist, liegt β-Escin (das auch als Flogencyl bezeichnet wird) in Form von Schuppen vor, die praktisch wasserunlöslich, aber leicht löslich in Alkohol sind.

### • Salix alba

Hauptbestandteile der Extrakte von *Salix alba* sind Phenolglykoside und insbesondere Salicylate wie z.B. Salicin, Salicortin und Tremulacin:

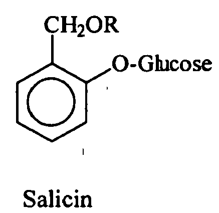

### • Harpagophytum procumbens

Die Hauptbestandteile der Extrakte der Teufelskralle *(Harpagophytum procumbens)* sind Iridoidglucoside, Harpagoside, Harpagide und Procumbide.

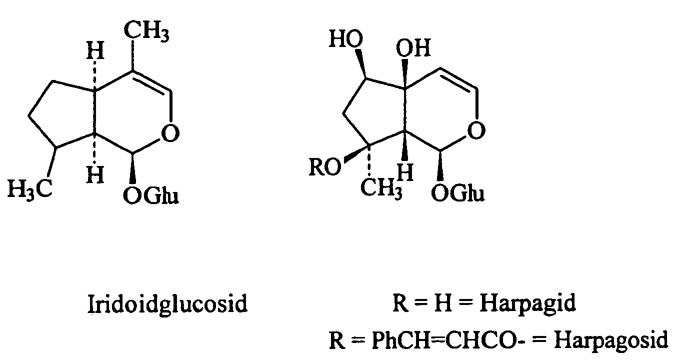

Des weiteren findet man Stachylose und glycosylierte Phytosterole (z.B. β-Sitosterol), Flavonoide (z.B. Kaempferol, Luteolin), Phenolsäuren und glycosidische Phenylpropansäureestem (z.B. Verbacoside, Isoacteoside).

### Biogene aktive Prinzipien

Die biogenen aktiven Prinzipien können aus folgenden Wirkstoffgruppen ausgewählt sein:
- Bakterizide (z.B. Gentamicin);
- Antivirale Wirkstoffe (z.B. Riphampacin, Acyclovir);
- Fungizide (z.B. Anphotericin B, Myconazol, Terconazol, Econazol, Isoconazol, Thioconazol, Biphonazol, Chlotrimazol, Ketoconazol, Butaconazol, Itraconazol, Oxyconazol, Phenticonazol, Nystatin, Naphtifine, Zinoconazol, Cyclopyroxolamine);
- Antiparasitäre Wirkstoffe (z.B. Antimonsalze);
- Antitumorwirkstoffe (z.B. Adriamycin, Vinblastin, Vincristin, Mitomycin C, Doxorubicin, Daunorubicin, Methotrexat, cis-Platin);
- Proteine (z.B. Albumin);
- Enzyme (z.B. Catalase);
- Peptides (z.B. Cyclosporin A, Hirudin, Somatostatin, Thymopentin);
- Hormone und deren Antagonisten (z.B. Oestrogen Calcitonin, Carbocalcitonin, Insulin);
- Neurotransmitters und deren Antagonisten (z.B. Acetylcholin);
- Lipoproteine (z.B. alpha-Lipoprotein);
- Immunomodulatoren (z.B. Interferon oder Interleukin);
- Entzündungshemmer (z.B. Indomethacin, Ibuprofen, Sulindac, Pyroxicam, Naproxen, Dexametason);
- Narkotica (z.B. Codein);
- Vitamine (z.B. alpha-Tocopherol, alpha-Tocopherolacetat, alpha-Tocopherolpalmitat, Carotine, Ascorbinsäure)
- Nukleinsäuren und deren Fragmente (z.B. DNS, RNS, Thiamin);
- Mono-, Di- and Polysaccharide (z.B. Glycogen, beta-Glucane);
- Hautberuhigende Wirkstoffe (z.B. Retinol, Bisabolol, Allantoin, Phytantriol, Panthenol, AHA-Säuren, Hyaluronsäure, Aminosäuren, Ceramide, Pseudoceramide);
- Stimulatien (z.B. Koffein, Tein, Menthol)
- Mineralische und Spurenelementsalze (z.B. Eisen, Zink, Selen β-Glucane, Retinol, Bisabolol, Allantoin, Phytantriol, Panthenol, AHA-Säuren, Aminosäuren, Ceramide, Pseudoceramide)

### Ölphase

Die Matrix kann vor der Bildung der Membran optional in einer Ölphase dispergiert werden. Dies ist insbesondere dann empfehlenswert, wenn besonders kleine Mikrokapseln erzeugt werden sollen. Als Ölkörper kommen beispielsweise in Betracht : Guerbetalkohole auf Basis von Fettalkoholen mit 6 bis 18, vorzugsweise 8 bis 10 Kohlenstoffatomen, Ester von linearen C₆-C₂₂-Fettsäuren mit linearen C₆-C₂₂-Fettalkoholen, Ester von verzweigten C₆-C₁₃₋Carbonsäuren mit linearen C₆-C₂₂-Fettalkoholen, wie z.B. Myristylmyristat, Myristylpalmitat, Myristylstearat, Myristylisostearat, Myristyloleat, Myristylbehenat, Myristylerucat, Cetylmyristat, Cetylpalmitat, Cetylstearat, Cetylisostearat, Cetyloleat, Cetylbehenat, Cetylerucat, Stearylmyristat, Stearylpalmitat, Stearylstearat, Stearylisostearat, Stearyloleat, Stearylbehenat, Stearylerucat, Isostearylmyristat, Isostearylpalmitat, Isostearylstearat, Isostearylisostearat, Isostearyloleat, Isostearylbehenat, Isostearyloleat, Oleylmyristat, Oleylpalmitat, Oleylstearat, Oleylisostearat, Oleyloleat, Oleylbehenat, Oleylerucat, Behenylmyristat, Behenylpalmitat, Behenylstearat, Behenylisostearat, Behenyloleat, Behenylbehenat, Behenylerucat, Erucylmyristat, Erucylpalmitat, Erucylstearat, Erucylisostearat, Erucyloleat, Erucylbehenat und Erucylerucat. Daneben eignen sich Ester von linearen C₆-C₂₂-Fettsäuren mit verzweigten Alkoholen, insbesondere 2-Ethylhexanol, Ester von Hydroxycarbonsäuren mit linearen oder verzweigten C₆-C₂₂-Fettalkoholen, insbesondere Dioctyl Malate, Ester von linearen und/oder verzweigten Fettsäuren mit mehrwertigen Alkoholen (wie z.B. Propylenglycol, Dimerdiol oder Trimertriol) und/oder Guerbetalkoholen, Triglyceride auf Basis C₆-C₁₀-Fettsäuren, flüssige Mono-/Di-/Triglycerid-mischungen auf Basis von C₆-C₁₈-Fettsäuren, Ester von C₆-C₂₂-Fettalkoholen und/oder Guerbetalkoholen mit aromatischen Carbonsäuren, insbesondere Benzoesäure, Ester von C₂-C₁₂-Dicarbonsäuren mit linearen oder verzweigten Alkoholen mit 1 bis 22 Kohlenstoffatomen oder Polyolen mit 2 bis 10 Kohlenstoffatomen und 2 bis 6 Hydroxylgruppen, pflanzliche Öle, verzweigte primäre Alkohole, substituierte Cyclohexane, lineare und verzweigte C₆-C₂₂-Fettalkoholcarbonate, Guerbetcarbonate, Ester der Benzoesäure mit linearen und/oder verzweigten C₆-C₂₂-Alkoholen (z.B. Finsolv® TN), lineare oder verzweigte, symmetrische oder unsymmetrische Dialkylether mit 6 bis 22 Kohlenstoffatomen pro Alkylgruppe, Ringöffnungsprodukte von epoxidierten Fettsäureestern mit Polyolen, Siliconöle und/oder aliphatische bzw. naphthenische Kohlenwasserstoffe, wie z.B. wie Squalan, Squalen oder Dialkylcyclohexarie.

### Herstellverfahren

Die Herstellung der erfindungsgemäßen Mikrokapseln gliedert sich in die Phasen der thermischen Gelbildung und der Härtung. Dazu empfiehlt es sich zunächst die Agarose in der Hitze in Wasser zu lösen und mit dem Alginat, dem Gellan Gum und dem Wirkstoff zu versetzen und eine homogene Matrix herzustellen. Das Gewichtsverhältnis der Ausgangsstoffe, die die Matrix bilden, über welches man die Härte und Beständigkeit der Kapseln steuert, kann dabei 1 : 0, 1 *-* 5 : 0,1 - 5 betragen. Typisch sind Einsatzmengen - bezogen auf die Gesamtzusammensetzung der Kapsel - von 0,1 bis 2 Gew.-% Agarosen, 0,01 bis 5 Gew.-% Alginat und 0,001 bis 5 Gew.% Gellan Gum, wobei mit der Menge an Gellan Gum, die Härte und Beständigkeit der Kapseln zunimmt. Bezogen auf die Summe der Matrixmaterialien kann die Wirkstoffmenge im Bereich von 100 : 0 und 90 : 10, vorzugsweise 25 : 75 bis 75 : 25 und insbesondere 40 : 60 bis 60 : 40 betragen. Kapseln, die keine Wirkstoffe enthalten, werden dabei ausschließlich zu dekorativen Zwecken eingesetzt. Die Bildung der Kapseln erfolgt anschließend durch Abkühlung, wobei die heißen Lösungen in ein Fällungsbad getropft werden. Hierbei kann es sich beispielsweise um eine Ölphase bei einer Temperatur von 20 °C oder darunter handeln, was bevorzugt ist, wenn möglichst kleine Kapseln erzeugt werden sollen; empfehlenswert ist, diesen Vorgang durch Eintrag von Rührenergie zu unterstützen. Besteht hingegen ein Interesse an größeren Sphären, so wird auf das Dispergieren der Matrix in der Ölphase verzichtet und gleich bei einer Temperatur von 20 °C oder darunter in ein Bad einer wässrigen Erdalkalisalzlösung, vorzugsweise von Calciumchlorid (z.B. 0,5 bis 2 Gew.-%ige Lösung) vertropft. Auch hier bilden sich die Kapseln durch Abkühlung, gleichzeitig erfolgt aber eine Härtung durch Einbau der zweiwertigen Kationen in die Hülle. Wurde die Matrix zuvor in einer Ölphase dispergiert gibt es zwei Möglichkeiten : entweder man tropft die Dispersion in das Härtungsbad und trennt die aufschwimmende Ölphase anschließend ab oder aber - bevorzugt - man wäscht dekantiert die Mikrokapseln von der Ölphase, wäscht diese mit Tensidlösung und Wasser und bringt sie dann in das Härtungsbad ein. Die Mikrokapseln können anschließend abfiltriert und getrocknet werden, vorzugsweise werden sie jedoch als wässrige Dispersionen in den Handel gebracht. Zu diesem Zwecke setzt man in der Regel noch geringe Mengen an Konservierungsstoffen, beispielsweise Alkalisorbate oder benzoate.

### Gewerbliche Anwendbarkeit

In einer ersten Ausführungsform der Erfindung können die neuen Mikrokapseln zur Herstellung von Nahrungsmittelzubereitungen verwendet werden, d.h. sie sind zur oralen Aufnahme bestimmt. Werden als Wirkstoffe Pflanzenextrakte eingesetzt, so kann es sich dabei speziell um Nahrungsmittelergänzungsstoffe (sogenannte "Functional Food") handeln. Alternativ können die Mikrokapseln auch zur Herstellung kosmetischer oder pharmazeutischer Formulierungen dienen. Ein typisches Beispiel wären Lippenstifte mit verkapselten Farb- und Geschmacksstoffen.

### Beispiele

### Beispiel 1

In einer 100-ml-Rührapparatur wurden 33 g Wasser auf 100°C erhitzt und mit 1 g Agar Agar versetzt. Anschließend wurden 50 g einer 2 Gew.-%igen wässrigen Calciumalginatlösung sowie 5 g einer 1 Gew.-%igen wässrigen Lösung von Gellan Gum (Kelcogel®, Degussa AG) zugegeben. Nach gründlichem Vermischen der Komponenten wurde diesen eine Dispersion von 1 g roten Eisenoxid (Nahrungsmittelqualität) in 10 g Glycerin, 0,3 g Kaliumsorbat sowie 0,3 g Kaliumbenzoat zugegeben. Die so erhaltene Zubereitung wurde anschließend langsam in ein auf ca. 20 °C temperiertes Bad eines Pflanzenöls getropft, wobei Kapseln des Typs Agar/Gellan Gum/Alginat gebildet wurden. Diese wurden abfiltriert und zunächst mit Wasser und dann mit einer 1 Gew.-%igen wässrigen Lösung von Tween 20 gewaschen, bis anhaftende Spuren des Pflanzenöls entfernt waren. Anschließend wurden die noch weichen Kapseln in ein Bad einer 0,5 Gew.-%igen wässrigen Lösung von Calciumchlorid eingebracht und dabei durch Vernetzung gehärtet. Der mittlere Durchmesser der Kapseln betrug 25 micras = 0,25 mm.

### Beispiel 2

In einer 100-ml-Rührapparatur wurden 33 g Wasser auf 100°C erhitzt und mit 1 g Agar Agar versetzt. Anschließend wurden 50 g einer 2 Gew.-%igen wässrigen Calciumalginatlösung sowie 5 g einer 1 Gew.%igen wässrigen Lösung von Gellan Gum (Kelcogel®, Degussa AG) zugegeben. Nach gründlichem Vermischen der Komponenten wurde diesen eine Dispersion von 1 g roten Eisenoxid (Nahrungsmittelqualität) in 10 g Glycerin, 0,3 g Kaliumsorbat sowie 0,3 g Kaliumbenzoat zugegeben. Die so erhaltene Zubereitung wurde anschließend langsam in ein auf ca. 20 °C temperiertes Bad einer 0,5 Gew.-%igen wässrigen Lösung von Calciumchlorid eingebracht und dabei durch Vernetzung gehärtet. Der mittlere Durchmesser der Kapseln betrug 25 micras = 0,35 mm.

### Beispiel 3

In einer 100-ml-Rührapparatur wurden 33 g Wasser auf 100°C erhitzt und mit 1 g Agar Agar versetzt. Anschließend wurden 50 g einer 2 Gew.-%igen wässrigen Calciumalginatlösung sowie 5 g einer 1 Gew.%igen wässrigen Lösung von Gellan Gum (Kelcogel®, Degussa AG) zugegeben. Nach gründlichem Vermischen der Komponenten wurde diesen eine Dispersion von 1 g eines gefriergetrockneten Extraktes von *Camellia sinensis* in 10 g Glycerin, 0,3 g Kaliumsorbat sowie 0,3 g Kaliumbenzoat zugegeben. Die so erhaltene Zubereitung wurde anschließend langsam in ein auf ca. 20 °C temperiertes Bad eines Pflanzenöls getropft, wobei Kapseln des Typs Agar/Gellan Gum/Alginat gebildet wurden. Diese wurden abfiltriert und zunächst mit Wasser und dann mit einer 1 Gew.-%igen wässrigen Lösung von Tween 20 gewaschen, bis anhaftende Spuren des Pflanzenöls entfernt waren. Anschließend wurden die noch weichen Kapseln in ein Bad einer 0,5 Gew.%igen wässrigen Lösung von Calciumchlorid eingebracht und dabei durch Vernetzung gehärtet. Der mittlere Durchmesser der Kapseln betrug 25 micras = 0,22 mm.

### Beispiel 4

In einer 100-ml-Rührapparatur wurden 33 g Wasser auf 100 °C erhitzt und mit 1 g Agar Agar versetzt. Anschließend wurden 50 g einer 2 Gew.-%igen wässrigen Calciumalginatlösung sowie 5 g einer 1 Gew.-%igen wässrigen Lösung von Gellan Gum (Kelcogel®, Degussa AG) zugegeben. Nach gründlichem Vermischen der Komponenten wurde diesen eine Dispersion von 1 g eines gefriergetrockneten Extraktes von *Ginkgo biloba* in 10 g Glycerin, 0,3 g Kaliumsorbat sowie 0,3 g Kaliumbenzoat zugegeben. Die so erhaltene Zubereitung wurde anschließend langsam in ein auf ca. 20 °C temperiertes Bad einer 0,5 Gew.-%igen wässrigen Lösung von Calciumchlorid eingebracht und dabei durch Vernetzung gehärtet. Der mittlere Durchmesser der Kapseln betrug 25 micras = 0,30 mm.

## Patentansprüche

1. Mikrokapseln mit mittleren Durchmessern im Bereich von 0,001 bis 5 mm, bestehend aus einer Hüllmembran und einer Matrix, dadurch erhältlich, dass man
(a) aus Agarosen, Alginaten, Gellan Gum und gegebenenfalls Wirkstoffen eine Matrix zubereitet,
(b) gegebenenfalls die Matrix in einer Ölphase dispergiert,
(c) die Matrix mit wässrigen Lösungen von Erdalkalimetallsalzen behandelt und gegebenenfalls dabei die Ölphase entfernt.

2. Verfahren zur Herstellung von Mikrokapseln mit mittleren Durchmessern im Bereich von 0,001 bis 5 mm, bestehend aus einer Hüllmembran und einer Matrix, bei dem man
(a) aus Agarosen, Alginaten, Gellan Gum und gegebenenfalls Wirkstoffen eine Matrix zubereitet,
(b) gegebenenfalls die Matrix in einer Ölphase dispergiert,
(c) die Matrix mit wässrigen Lösungen von Erdalkalimetallsalzen behandelt und gegebenenfalls dabei die Ölphase entfernt.

3. Verfahren nach Anspruch 2, **dadurch gekennzeichnet, dass** man Mikrokapseln herstellt, die einen mittleren Durchmesser von 10 bis 500 micras (= 0,01 bis 0,5 mm) aufweisen.

4. Verfahren nach den Ansprüchen 2 und/oder 3, **dadurch gekennzeichnet, dass** man Wirkstoffe einsetzt, die ausgewählt sind aus der Gruppe der Farbstoffe, Geschmacksstoffe Pflanzenextrakte und biogenen aktiven Prinzipien.

5. Verfahren nach mindestens einem der Ansprüche 2 bis 4, **dadurch gekennzeichnet, dass** als Wirkstoffe Extrakte von Pflanzen einsetzt, die ausgewählt sind aus der Gruppe, die gebildet wird von *Ginkgo biloba, Oleacea europensis, Glyzyrrhiza glabra, Vaccinium myrtillus, Trifolium pratense, Litchi sinensis, Vitis vinifera, Brassica oleracea, Punica granatum, Petroselinium crispum, Centella asiatica, Passiflora incarnata, Medicago sativa, Valeriana officinalis, Castanea sativa, Salix alba* sowie *Hapagophytum procumbens*.

6. Verfahren nach mindestens einem der Ansprüche 2 bis 5, **dadurch gekennzeichnet, dass** man die Agarosen, Alginate und das Gellan Gum im Gewichtsverhältnis 1 : 0,1-5 : 0,1-5 einsetzt.

7. Verfahren nach mindestens einem der Ansprüche 2 bis 6, **dadurch gekennzeichnet, dass** man die die Matrix bildenden Einsatzstoffe einerseits und die Wirkstoffe andererseits im Gewichtsverhältnis 0 : 100 bis 99 : 1 einsetzt.

8. Verfahren nach mindestens einem der Ansprüche 2 bis 7, **dadurch gekennzeichnet, dass** man zur Härtung der Mikrokapseln wässrige Calciumchloridlösungen einsetzt.

9. Verwendung von Mikrokapseln nach Anspruch 1 zur Herstellung von Nahrungsmittelzubereitungen.

10. Verwendung von Mikrokapseln nach Anspruch 1 zur Herstellung von kosmetischen und/oder pharmazeutischen Zubereitungen.

## Claims

1. Microcapsules with average diameters in the range from 0.001 to 5 mm, consisting of a coating membrane and a matrix, obtainable by
(a) preparing a matrix from agaroses, alginates, gellan gum and optionally active ingredients,
(b) optionally dispersing the matrix in an oil phase,
(c) treating the matrix with aqueous solutions of alkaline earth metal salts and optionally removing the oil phase in the process.

2. Process for the preparation of microcapsules with average diameters in the range from 0.001 to 5 mm, consisting of a coating membrane and a matrix, in which
(a) a matrix is prepared from agaroses, alginates, gellan gum and optionally active ingredients,
(b) optionally the matrix is dispersed in an oil phase,
(c) the matrix is treated with aqueous solutions of alkaline earth metal salts and optionally the oil phase is removed in the process.

3. Process according to Claim 2, **characterized in that** microcapsules are prepared which have an average diameter of from 10 to 500 micras (= 0.01 to 0.5 mm).

4. Process according to Claims 2 and/or 3, **characterized in that** active ingredients are used which are selected from the group of dyes, flavourings, plant extracts and biogenic active principles.

5. Process according to at least one of Claims 2 to 4, **characterized in that** the active ingredients used are extracts from plants which are selected from the group which is formed by *Ginkgo biloba, Oleacea europensis, Glyzyrrhiza glabra, Vaccinium myrtillus, Trifolium pratense, Litchi sinensis, Vitis vinifera, Brassica oleracea, Punica granatum, Petroselinium crispum, Centella asiatica, Passiflora incarnata, Medicago sativa, Valeriana officinalis, Castanea sativa, Salix alba* and *Hapagophytum procumbens*.

6. Process according to at least one of Claims 2 to 5, **characterized in that** the agaroses, alginates and the gellan gum are used in the weight ratio 1:0.1-5:0.1-5.

7. Process according to at least one of Claims 2 to 6, **characterized in that** the feed materials forming the matrix on the one hand and the active ingredients on the other hand are used in the weight ratio 0:100 to 99:1.

8. Process according to at least one of Claims 2 to 7, **characterized in that** aqueous calcium chloride solutions are used for hardening the microcapsules.

9. Use of microcapsules according to Claim 1 for producing food preparations.

10. Use of microcapsules according to Claim 1 for producing cosmetic and/or pharmaceutical preparations.

## Revendications

1. Microcapsules ayant des diamètres moyens dans la plage de 0,001 à 5 mm, consistant en une membrane enveloppe et une matrice, pouvant être obtenues par
a) préparation d'une matrice à partir d'agaroses, d'alginates, de gomme gellane et éventuellement de substances actives,
b) éventuellement dispersion de la matrice dans une phase huileuse,
c) traitement de la matrice par des solutions aqueuses de sels de métaux alcalino-terreux et éventuellement en outre élimination de la phase huileuse.

2. Procédé pour la préparation de microcapsules ayant des diamètres moyens dans la plage de 0,001 à 5 mm, consistant en une membrane enveloppe et une matrice, dans lequel
a) on prépare une matrice à partir d'agaroses, d'alginates, de gomme gellane et éventuellement de substances actives,
b) éventuellement on disperse la matrice dans une phase huileuse,
c) on traite la matrice par des solutions aqueuses de sels de métaux alcalino-terreux et éventuellement en outre on élimine la phase huileuse.

3. Procédé selon la revendication 2, **caractérisé en ce qu'**on prépare des microcapsules qui ont un diamètre moyen de 10 à 500 micromètres (= 0,01 à 0,5 mm).

4. Procédé selon la revendication 2 et/ou la revendication 3, **caractérisé en ce qu'**on utilise des substances actives qui sont choisies dans le groupe des colorants, des arômes, des extraits de plantes et des principes actifs biogènes.

5. Procédé selon au moins l'une des revendications 2 à 4, **caractérisé en ce qu'**on utilise comme substances actives des extraits de plantes qui sont choisies dans le groupe constitué par *Ginkgo biloba, Oleacea europensis, Glyzyrrhiza glabra, Vaccinium myrtillus, Trifolium pratense, Litchi sinensis, Vitis vinifera, Brassica oleracea, Punica granatum, Petroselinium crispum, Centella asiatica, Passiflora incarnata, Medicago sativa, Valeriana officinalis, Castanea sativa, Salix alba* ainsi que *Hapagophytum procumbens.*

6. Procédé selon au moins l'une des revendications 2 à 5, **caractérisé en ce qu'**on utilise les agaroses, les alginates et la gomme gellane en un rapport pondéral de 1:0,1-5:0,1-5.

7. Procédé selon au moins l'une des revendications 2 à 6, **caractérisé en ce qu'**on utilise les matières premières constituant la matrice, d'une part, et les substances actives, d'autre part, en un rapport pondéral de 0:100 à 99:1.

8. Procédé selon au moins l'une des revendications 2 à 7, **caractérisé en ce que** pour le durcissement des microcapsules on utilise des solutions aqueuses de chlorure de calcium.

9. Utilisation de microcapsules selon la revendication 1, pour la fabrication de préparations alimentaires.

10. Utilisation de microcapsules selon la revendication 1, pour la fabrication de préparations cosmétiques et/ou pharmaceutiques.
